(19)

Europäisches
Patentamt
European
Patent Office
Office européen
des brevets

(11)　**EP 1 956 629 A2**

(12)　**EUROPEAN PATENT APPLICATION**

(43) Date of publication:
**13.08.2008　Bulletin 2008/33**

(51) Int Cl.:
***H01J 17/49*** *(2006.01)*

(21) Application number: **08101105.8**

(22) Date of filing: **30.01.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **08.02.2007　KR 20070013309**

(71) Applicant: **Samsung SDI Co., Ltd.
Suwon-si, Gyeonggi-do (KR)**

(72) Inventors:
 • **Hong, Chong-Gi
  Suwon-si, Gyeonggi-do (KR)**
 • **Kang, Tae-Kyoung
  Suwon-si, Gyeonggi-do (KR)**

 • **Choo, Seong-Hun
  Suwon-si, Gyeonggi-do (KR)**
 • **Kim, Tristan
  Suwon-si, Gyeonggi-do (KR)**
 • **Park, Yong-Su
  Suwoni-si, Gyeonggi-do (KR)**
 • **Kwak, Joo-Ri
  Suwon-si, Gyeonggi-do (KR)**
 • **Eom, Ki-Jong
  Suwon-si, Gyeonggi-do (KR)**
 • **Kim, Min-Sic
  Suwon-si, Gyeonggi-do (KR)**

(74) Representative: **Walaski, Jan Filip et al
Venner Shipley LLP
20 Little Britain
London EC1A 7DH (GB)**

(54)　**Plasma display device**

(57)　Provided is a plasma display device (100). The plasma display device includes a plasma display panel creating images and including a front substrate (110), a rear substrate (120), and a Plurality of discharge cells (S) defined between the front substrate and the rear substrate, phosphors being coated in the discharge cells (125); and an attachable filter (130) directly attached to a front surface of the front substrate serving as an image display surface, wherein tile attachable filter and the phosphors are respectively coloured with different first and second colours. The attachable filter and predetermined elements of the plasma display panel are coloured with complementary colours, and thus, the plasma display device shows a better bright room contrast in the absence of separate Mack stripes.

EP 1 956 629 A2

**Description**

The present invention relates to a plasma display device, and more particularly, to a plasma display device improving a bright room contrast based on a subtractive colour mixing principle and a complementary colour effect instead of using a separate light-absorbing member.

A plasma display device is a flat panel display that displays images using a gas discharge phenomenon. Plasma display devices have been highlighted as next generation flat panel displays that can replace Cathode Ray Tubes (CRTs) since they have excellent display capabilities in terms of display capacity, brightness, contrast, afterimage, and viewing angle, and furthermore, are thin and can achieve a large-scale display.

Generally, a plasma display device includes a plasma display panel creating images and a front filter disposed in front of the plasma display panel to improve image quality and to shield electromagnetic waves.

In the plasma display panel, when discharge occurs in a plurality of discharge cells defined between two substrates, ultraviolet rays are generated and converted to visible light that can be sensed by a viewer, thereby achieving images through the emission of the visible light.

At this time, when external visible light incident on a transparent front substrate is reflected from a white transparent dielectric layer, white barrier ribs, apparently white phosphors, etc., and then discharged from the front substrate, reflection brightness is increased, thereby reducing the bright room contrast of the plasma display panel.

In view of the above-described problem, according to a conventional method, black stripes are formed using a dark material with low brightness in order to absorb external incident light, thereby reducing reflection brightness. However, in order to separately form the black stripes, additional paste coating and patterning processes are needed. In addition, since the black stripes are only formed in some areas in order to prevent the black stripes from blocking the emission of visible light, absorption of external light is only performed over a very limited area of a plasma display panel.

A glass filter is mainly used as a front filter disposed in front of a plasma display panel. However, the glass filter is heavy and must be carefully handled due to the characteristics of a glass material, which requires the formation of a separate supporting structure for firmly installing the glass filter.

The present invention provides a plasma display device for improving a bright room contrast based on a subtractive colour mixing principle and a complementary colour effect instead of using a separate light-absorbing member.

The present invention also provides a plasma display device with an improved filter structure, thereby reducing manufacturing costs and providing improved images.

According to an aspect of the present invention, there is provided a plasma display device including: a plasma display panel creating images and including a front substrate, a rear substrate, and a plurality of discharge cells defined between the front substrate and the rear substrate, phosphors being coated in the discharge cells; and an attachable filter directly attached to a front surface of the front substrate serving as an image display surface, wherein the attachable filter and the phosphors are respectively coloured with different first and second colours.

According to another aspect of the present invention, there is provided a plasma display device including: a plasma display panel creating images and including a front substrate, a rear substrate, and a plurality of discharge cells defined between the front substrate and the rear substrate, phosphors being coated in the discharge cells; and an attachable filter directly attached to a front surface of the front substrate serving as an image display surface, wherein complementary first and second colours are alternately coloured from front to back in such a manner that the attachable filter is coloured with the first colour, the front substrate is coloured with the second colour, and the phosphors are coloured with the first colour.

According to another aspect of the present invention, there is provided a plasma display device including: a plasma display panel including a front substrate supporting a plurality of discharge electrodes, a front dielectric layer having the discharge electrodes buried therein, barrier ribs defining a plurality of discharge cells between the front substrate and the rear substrate, phosphors coated in the discharge cells, and a discharge gas filled in the discharge cells; and an attachable filter directly attached to a front surface of the front substrate serving as an image display surface, wherein complementary first and second colours are alternately coloured from front to back in such a manner that the attachable filter is coloured with the first colour, the front substrate is coloured with the second colour, the front dielectric layer is coloured with the first colour, and the phosphors are coloured with the second colour.

According to another aspect of the present invention, there is provided a plasma display device including: a plasma display panel creating images and including a front substrate, a rear substrate, and a plurality of discharge cells disposed between the front substrate and the rear substrate, phosphors being coated in the discharge cells; and a front filter, disposed at the front of the front substrate serving as an image display surface, including a transparent substrate and a plurality of external light-absorbing patterns arranged at predetermined intervals in the transparent substrate, wherein the external light-absorbing patterns and the phosphors are respectively coloured with complementary first and second colours.

According to another aspect of the present invention, there is provided a plasma display device including: a plasma display panel creating images and including a front substrate, a rear substrate, and a plurality of discharge cells disposed between the front substrate and the rear substrate, phosphors being coated in the discharge cells; and a front filter, disposed at the front of the front substrate serving as an image display surface, including a transparent substrate and a plurality of external light-absorbing patterns arranged at predetermined intervals in the transparent substrate, wherein complementary first and second colours are alternately coloured from front to back in such a manner that the external light-absorbing patterns are coloured with the first colour, the front substrate is coloured with the second colour, and the phosphors are coloured with the first colour.

The above and other features and advantages of the present invention will become more apparent by describing in detail exemplary embodiments thereof with reference to the attached drawings in which:

FIG. 1 is an exploded perspective view illustrating a plasma display device according to a first embodiment of the present invention;

FIG. 2 is a vertical sectional view taken along lines II-II and II'-II' of FIG. 1;

FIG. 3 is a colour circle diagram illustrating subtractive colour mixing of different colours and complementary colour relationships;

FIG. 4 is a vertical sectional view illustrating a plasma display device according to a second embodiment of the present invention;

FIG. 5 is a vertical sectional view illustrating a plasma display device according to a third embodiment of the present invention;

FIG. 6 is a vertical sectional view illustrating a plasma display device according to a fourth embodiment of the present invention;

FIG. 7 is a vertical sectional view illustrating a plasma display device according to a fifth embodiment of the present invention;

FIG. 8 is a vertical sectional view illustrating a plasma display device according to a sixth embodiment of the present invention;

FIG. 9 is a vertical sectional view illustrating a plasma display device according to a seventh embodiment of the present invention;

FIG. 10 is a vertical sectional view illustrating a plasma display device according to an eighth embodiment of the present invention;

FIG. 11 is a vertical sectional view illustrating a plasma display device according to a modified embodiment of FIG. 10;

FIG. 12 is an exploded perspective view illustrating a plasma display device according to a ninth embodiment of the present invention;

FIG. 13 is a vertical sectional view taken along a line XIII-XIII of FIG. 12;

FIG. 14 is a vertical sectional view illustrating a plasma display device according to a tenth embodiment of the present invention; and

FIG. 15 is a vertical sectional view illustrating a plasma display device according to a modified embodiment of the embodiment of FIG. 14.

The present invention will now be described more fully with reference to the accompanying drawings, in which exemplary embodiments of the invention are shown.

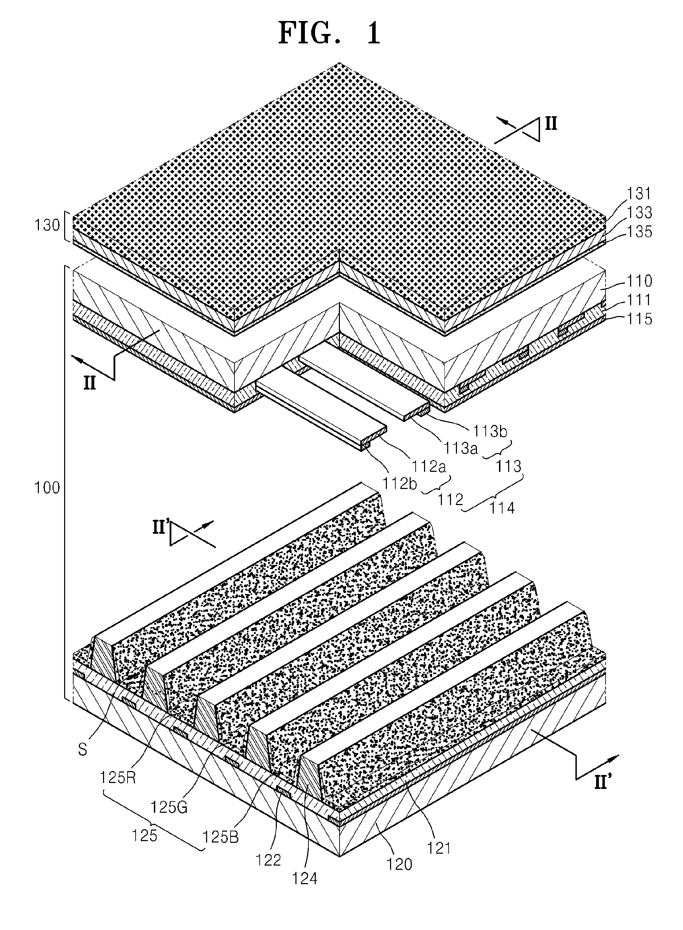

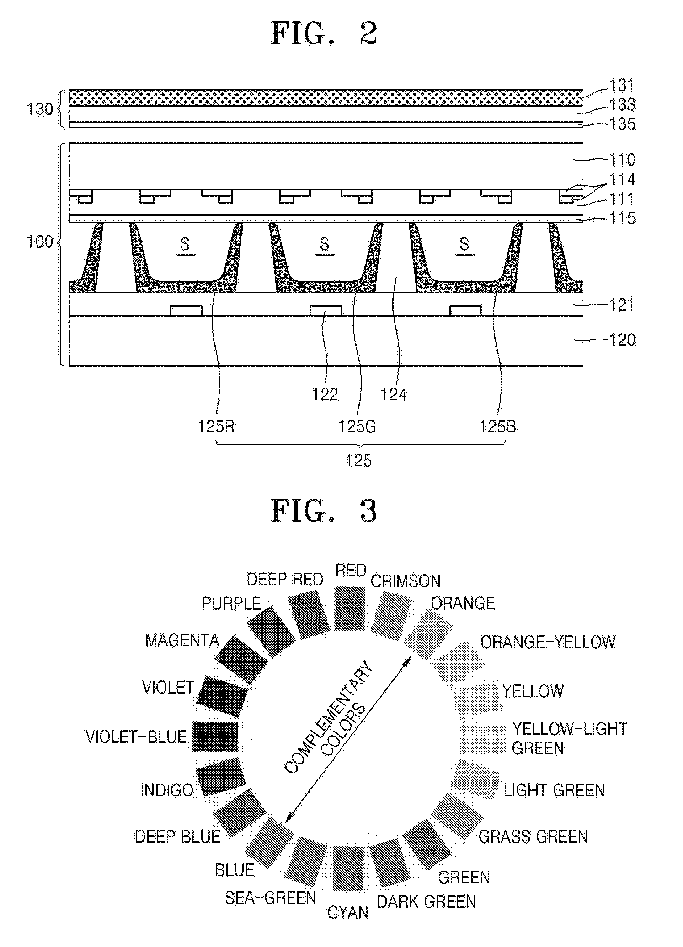

FIG. 1 is an exploded perspective view illustrating a plasma display device according to a first embodiment of the present invention and FIG. 2 is a vertical sectional view taken along lines II-II and II'-II' of FIG. 1. Referring to FIGS. 1 and 2, the plasma display device of the current embodiment of the present invention includes a plasma display panel 100 creating images and a filter 130, also referred to as an attachable filter, directly attached to an image display surface of the plasma display panel 100.

The plasma display panel 100 includes a front substrate 110 and a rear substrate 120 that are disposed to face each other and are separated from each other by a predetermined distance, and barrier ribs 124 defining a plurality of discharge cells S between the front substrate 110 and the rear substrate 120. The front substrate 110 and the rear substrate 120 may be glass substrates made of a glass material. The barrier ribs 124 disposed between the front substrate 110 and the rear substrate 120 may be arranged in open-type stripe patterns as illustrated in FIGS. 1 and 2, or in closed-type matrix patterns. A plurality of discharge electrode pairs 114 inducing a display discharge are arranged parallel to each other on a surface of the front substrate 110. Each pair of discharge electrodes 112 and 113 include transparent electrodes 112a and 113a made of a transparent conductive material such as indium tin oxide (ITO); and bus electrodes 112b and 113b, disposed to face the transparent electrodes 112a and 113a, one end of the bus electrodes 112b and 113b being connected to an external power source to supply a power to the transparent electrodes 112a and 113a. However, the technical scope of the present invention is not limited by the above discharge electrode structure. A dielectric layer 111 having the discharge electrode pairs 114 buried therein and a protective layer 115 covering the dielectric layer 111 may be sequentially disposed on the front substrate 110.

A plurality of address electrodes 122 inducing an address discharge may be disposed on the rear substrate 120. The address electrodes 122 may be buried in a dielectric layer 121. The discharge cells S are filled with a discharge gas that is excited by a display discharge to generate ultraviolet rays. The dielectric layer 121 and the barrier ribs 124 defining the discharge cells S are coated with phosphors 125 converting ultraviolet rays generated by discharge to visible light.

The attachable filter 130 is disposed on a front surface of the front substrate 110 serving as an image display surface. The attachable filter 130 may be directly attached to the front substrate 110. The attachable filter 130 includes a base film 131 and an electromagnetic wave-shielding layer 133 attached to a surface of the base film 131. The base film 131 serves as a support structure of the attachable filter 130, and may be made of polyethersulphone (PES), polyacrylate (PAR), polyetherimide (PEI), polyethylenenaphthalate (PEN), polyethyleneterephthalate (PET), polyphenylene sulfide (PPS), polyallylate, polyimide, polycarbonate (PC), cellulose triacetate (TAC), cellulose acetate propinonate (CAP), or the like. Polycarbonate, polyethyleneterephthalate, cellulose triacetate, and polyethylenenaphthalate are preferred.

The base film 131 may be coloured with a first colour in order to reduce the reflection of external light and to increase contrast. For this, the base film 131 may include a colouring material, e.g., a blue-colouring material such as Mn, Ni, or Co, or an orange-colouring material such as Cu, Sb, or Cr. The attachable filter 130 wholly exhibits a first colour due to the coloured base film 131. Provided that the attachable filter 130 apparently exhibits the first colour, some layers constituting the attachable filter 130 may be coloured with the first colour, or alternatively all layers constituting the attachable filter 130 may be coloured with the first colour.

The electromagnetic wave-shielding layer 133 serves to prevent an electromagnetic interference between the plasma display panel 100 and an ambient environment, thereby preventing malfunction of external electronic equipment and assuring a normal operation of the plasma display panel 100. The electromagnetic wave-shielding layer 133 may be formed in a mesh structure made of a metal material with good conductivity. In addition, the electromagnetic wave-shielding layer 133 may be formed as a single metal layer or a single metal oxide layer such as an ITO layer. The electromagnetic wave-shielding layer 133 may also be formed as two or more metal layers or two or more metal oxide layers or a composite layer of at least one metal layer and at least one metal oxide layer.

The attachable filter 130 is a multi-layered structure including the base film 131 and the electromagnetic wave-shielding layer 133 which are separately prepared and are stacked one upon the other. That is, in order to manufacture the attachable filter 130, the base film 131 and the electromagnetic wave-shielding layer 133 are separately formed, and thus, a film formation process must be performed twice or more. In this regard, for the sake of process convenience, a single-layered attachable filter having both a base film function and an electromagnetic wave-shielding function can be considered. For example, such an attachable filter may be formed to have a composite material structure wherein an electromagnetic wave-shielding conductive mesh is contained in a base film resin. In this case, the attachable filter can be formed by performing one film formation process.

The phosphors 125 are distributed in areas defined by the barrier ribs 124. The phosphors 125 are coloured with a second colour. The second colour of the phosphors 125, together with the first colour of the attachable filter 130, produces a dark colour through subtractive colour mixing. This can be explained by the characteristic of the subtractive colour mixing that as different colours of paints are mixed, brightness and saturation of the resulting colour are lowered, thereby producing a dark colour. In particular, when a first colour and a second colour form a complementary colour relationship, an image display surface of a display device appears black or near-black through mixing of the first colour and the second colour. Thus, a combination of complementary first and second colours enables to effectively absorb external light incident onto a display device. Effectiveness of such a complementary colour effect can be reliably demonstrated by comparing a conventional colourless plasma display device with a plasma display device according to the current embodiment of the present invention in terms of external light reflection brightness. That is, the external light reflection brightness of a plasma display device according to the current embodiment of the present invention is about 10.2 cd/m2 due to a complementary colour principle which is reduced as compared with the external light reflection brightness (15.2 cd/m2) of a conventional plasma display device. The external light reflection brightness affects a bright room contrast ratio which is an indicator of image quality, and the bright room contrast ratio can be defined as follows:

$$Bright\ room\ contrast\ ratio = \frac{peak\ brightness + background\ brightness}{external\ light\ reflection\ brightness + background\ brightness}$$

where the peak brightness is brightness of the highest light output level that can be achieved in a panel, i.e., brightness achieved when all of 256 grayscales are displayed, and the background brightness is brightness of the lowest light output level that can be achieved in a panel, i.e., brightness achieved when the grayscale is 0. As measured under the same conditions, the bright room contrast ratio of a plasma display device according to the current embodiment of the present invention is about 93:1 which is improved as compared with the bright room contrast ratio (70:1) of a conventional plasma display device.

There are many complementary colour pairs. In order to impart a predetermined colour tone according to a process convenience or individual preference, predetermined complementary colour pairs can be selected. FIG. 3 illustrates a colour circle for explaining subtractive colour mixing. Referring to the colour circle of FIG. 3, mixing colours at neighboring positions produces an intermediate colour, and mixing colours which are located far from each other produces a near-gray colour due to a lowering of brightness and saturation. Mixing complementary colours which are located at opposite positions produces a black colour or a near-black colour. As illustrated in FIG. 3, there are many complementary colour pairs, e.g., red-cyan, yellow-indigo, and blue-orange. However, when selecting a complementary colour pair, it is preferable to consider that when the attachable filter 130 directly exposed to external light is coloured with a colour having a low brightness, the absorption of external light can be directly facilitated by the attachable filter 130, which is more advantageous in terms of contrast. In this regard, when the first colour of the attachable filter 130 and the second colour of the phosphors 125 are mutually exclusively selected from complementary blue and orange colours, it is preferable to colour the attachable filter 130 with a blue colour having a relatively low brightness.

The phosphors 125 may include a colouring material, e.g., a blue-colouring material such as Mn, Ni, or Co, or an orange-colouring material such as Cu, Sb, or Cr. Of course, various other colouring materials can also be used provided that manufacturing is feasible.

In general colour displays, full-colour images are created through combination of different monochromatic lights. The monochromatic lights differentially contribute to a total brightness according to their wavelength ranges. Generally, colour images are created mainly through combinations of the three primary colours of light, i.e., red, green, and blue. It is known that about 50% of the total brightness is achieved by green light, and thus, green light has the most significant effect on the total brightness. Thus, when emission efficiency is reduced by the addition of a colouring material to a green phosphor, a reduction in brightness over the entire of a display may occur. In this regard, colouration may be selectively performed according to the type of phosphors, instead of colouring all phosphors. For example, in order to maintain brightness, green phosphors may not be coloured, whereas the other red and/or blue phosphors may be coloured. Moreover, taking into consideration that phosphors have different emission efficiencies, for example, no colouring material may be added to blue phosphors with the lowest emission efficiency, whereas the other red and/or green phosphors may be coloured, thereby achieving an entire balance in colour tone.

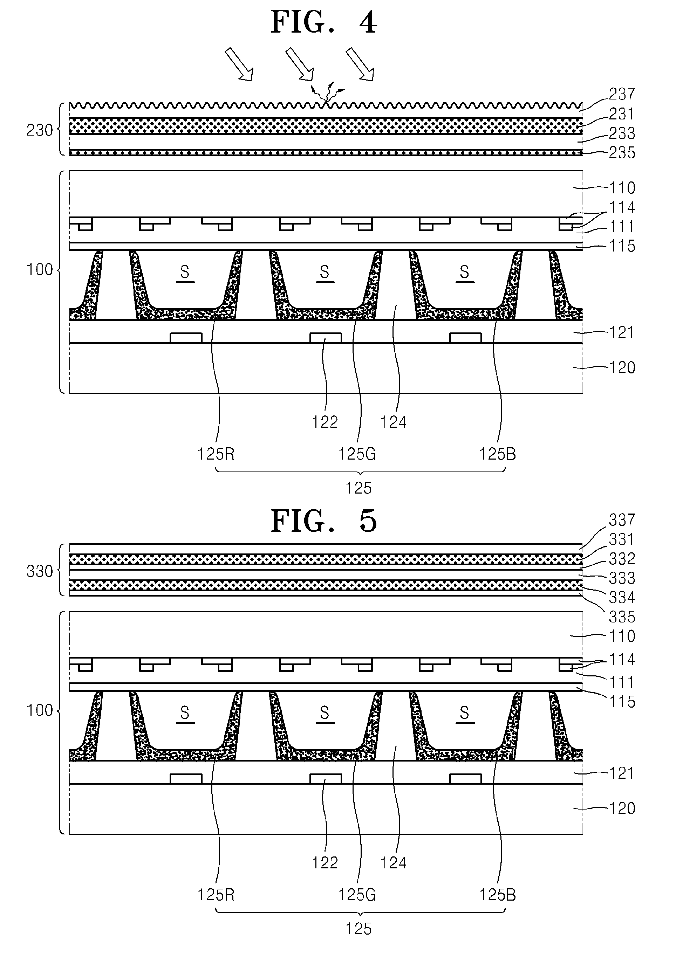

FIG. 4 is a vertical sectional view illustrating a plasma display device according to a second embodiment of the present invention. Referring to FIG. 4, an attachable filter 230 according to the current embodiment of the present invention includes a base film 231, an anti-glare layer 237 disposed on a surface of the base film 231, an electromagnetic wave-shielding layer 233 disposed on the other surface of the base film 231, and an adhesive layer 235, interposed between the attachable filter 230 and a plasma display panel 100, facilitating a binding between the attachable filter 230 and the plasma display panel 100.

The anti-glare layer 237 may have a fine concavo-convex surface pattern as illustrated in FIG. 4, or may have a regular or irregular surface pattern of a plurality of fine dots. The anti-glare layer 237 scatters or diffuses external light incident on the plasma display panel 100 over a wide angle so that external light is not sensed by a viewer or the amount of external light sensed by a viewer can be significantly reduced.

The adhesive layer 235 serves to fix the attachable filter 230 to a front surface of the plasma display panel 100, and may be made of a thermosetting resin or a UV curable resin that can be cured in response to a temperature condition or light. For example, an acrylate-based resin, a pressure sensitive adhesive (PSA), or the like may be used.

When needed, an additional function, e.g., near-infrared-shielding, colour correction, or neon light-shielding, may be added to the adhesive layer 235. To this end, for example, the adhesive layer 235 may include a near-infrared-shielding/absorbing material such as a copper compound or a phosphor compound. Meanwhile, a major technical constitution of the present invention is that the attachable filter 230 apparently exhibits a first colour. For this, the adhesive layer 235 may be coloured with the first colour. When the adhesive layer 235, together with the base film 231, is coloured with the first colour, a colouration effect can be reinforced. The colour correction of the adhesive layer 235 can also be achieved according to a colour to be coloured. As such, both the base film 231 and the adhesive layer 235 may be coloured with the first colour or one of the base film 231 and the adhesive layer 235 may be selectively coloured. In addition, provided that manufacturing is feasible, a layer(s) of the attachable filter 230 except the base film 231 and the adhesive layer 235 may also be coloured.

Like in the previous embodiment, in the current embodiment of present invention, subtractive colour mixing occurs in overlapping regions of the attachable filter 230 coloured with the first colour and phosphors 125 coloured with a second colour, thereby producing a dark colour which is advantageous in terms of absorption of external light. In particular, when the first colour and the second colour form a complementary colour relationship, an overlapping region of the first colour and the second colour appears black or near-black, thereby further facilitating the absorption of external light. Although not shown, as a modified embodiment of the attachable filter 230 illustrated in FIG. 4, an anti-reflective layer may be substituted for the anti-glare layer 237 constituting a front surface of the attachable filter 230. The anti-reflective layer serves to prevent external incident light from being reflected from an attachable filter and returned to outside, and may be formed by stacking a plurality of material layers with different refractive indices. Although the anti-reflective layer is based on a different principle from the anti-glare layer 237, both the layers have the same purpose in that they prevent external light from being sensed by a viewer, thereby improving the contrast of an image.

FIG. 5 is a vertical sectional view illustrating a plasma display device according to a third embodiment of the present invention. Referring to FIG. 5, an attachable filter 330 according to the current embodiment of the present invention includes a first base film 331 and a second base film 334 that are spaced apart from each other. The first base film 331 supports an anti-reflective layer 337 on a surface thereof and an adhesive layer 332 on the other surface thereof, and the second base film 334 supports an electromagnetic wave-shielding layer 333 on a surface thereof and an adhesive layer 335 on the other surface thereof. The first base film 331, the second base film 334, and the constitutional elements supported by the first base film 331 and the second base film 334 are adhered via the adhesive layer 332. The attachable filter 330 is directly attached to a plasma display panel 100 via the adhesive layer 335.

The first and second base films 331 and 334 may be coloured with a first colour. Alternatively, only one of the first and second base films 331 and 334 may also be selectively coloured with the first colour provided that the attachable filter 330 apparently exhibits the first colour. Moreover, when at least one of the adhesive layers 332 and 335 is coloured with the same colour as the first base film 331 and/or the second base film 334, the colouration effect of the attachable filter 330 can be further reinforced.

Phosphors 125 coated in areas defined by barrier ribs 124 may be coloured with a second colour complementary to the first colour. The second colour of the phosphors 125 is mixed with the first colour of the attachable filter 330 via a transparent dielectric layer 111 and a front substrate 110, thereby producing a black-based colour which is advantageous in terms of absorption of external light. Meanwhile, although not shown, an anti-glare layer may be substituted for the anti-reflective layer 337 constituting a front surface of the attachable filter 330.

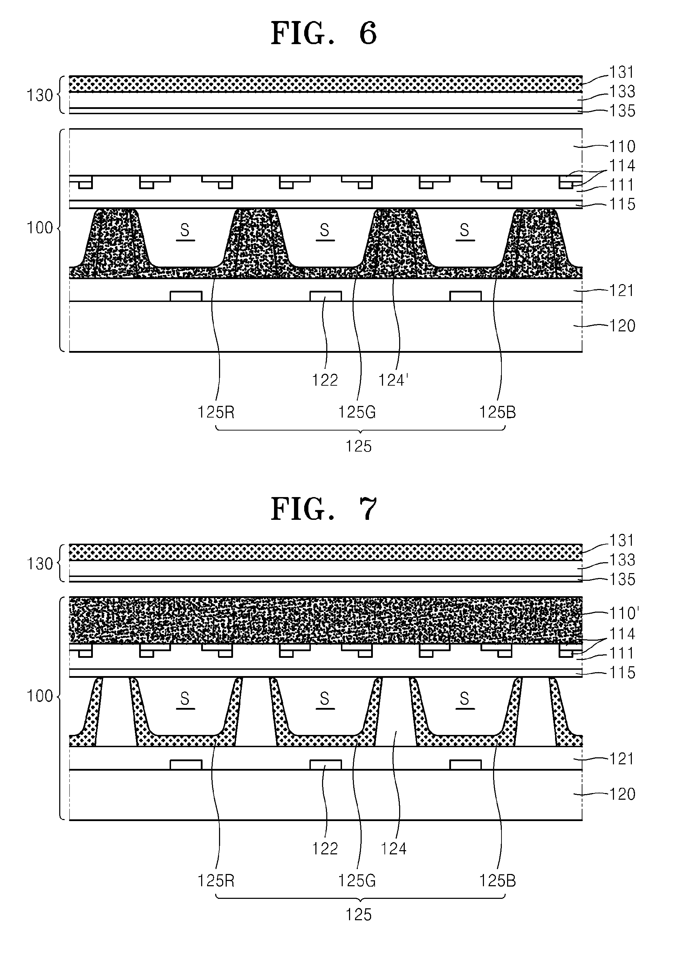

FIG. 6 is a vertical sectional view illustrating a plasma display device according to a fourth embodiment of the present invention. Referring to FIG. 6, the plasma display device according to the current embodiment of the present invention includes a plasma display panel 100 creating images and an attachable filter 130 disposed at an image display surface of the plasma display panel 100. The attachable filter 130 can be variously structured provided that it exhibits a first colour, as described in the previous embodiments.

The current embodiment of the present invention is different from the previous embodiments in that barrier ribs 124', together with phosphors 125, are coloured with a second colour. That is, taking into consideration that complementary first and second colours provide a complementary colour effect in overlapping regions, when the attachable filter 130 is coloured with the first colour, and the barrier ribs 124', which belong to non-display areas, as well as the phosphors 125 are coloured with the second colour complementary to the first colour, the absorption of external light based on a complementary colour effect can be substantially achieved over an entire display surface. The barrier ribs 124' may be formed by coating a barrier rib paste containing a colouring material on predetermined regions. For example, an orange-colouring material such as Cu, Sb, or Cr or a blue-colouring material such as Mn, Ni, or Co may be added to a barrier rib paste to form blue- or orange-coloured barrier ribs. Meanwhile, the barrier ribs 124' must exhibit a predetermined colour when viewed from a front substrate 110 displaying images. Thus, although the barrier ribs 124' may be wholly coloured, only top parts of the barrier ribs 124' close to the front substrate 110 may be selectively coloured.

FIG. 7 is a vertical sectional view illustrating a plasma display device according to a fifth embodiment of the present invention. Referring to FIG. 7, the plasma display device according to the current embodiment of the present invention includes a plasma display panel 100 creating images and an attachable filter 130 attached to an image display surface of the plasma display panel 100. The fundamental structure of the attachable filter 130 is substantially as described above in the previous embodiments, and the attachable filter 130 apparently exhibits a first colour. A detailed description about the attachable filter 130 will be omitted.

The plasma display panel 100 includes a front substrate 110', a rear substrate 120, and barrier ribs 124 defining a plurality of discharge cells S between the front substrate 110' and the rear substrate 120. The front substrate 110' is coloured with a second colour. Phosphors 125 are coated in areas defined by the barrier ribs 124. The phosphors 125 are coloured with the first colour. The first colour of the front substrate 110' and the second colour of the phosphors 125 may be selected from complementary colour pairs. For example, the first colour and the second colour may be selected from complementary blue and orange colours.

Here, mixing the first colour of the attachable filter 130 and the second colour of the front substrate 110' produces a black colour, which is called "a complementary colour effect". At the same time, mixing the second colour of the front substrate 110' and the first colour of the phosphors 125 provides another complementary colour effect. Thus, when the plasma display device is viewed from outside, the first colour of the attachable filter 130, the second colour of the front substrate 110', and the first colour of the phosphors 125 combine to thereby achieve a so-called "double-complementary colour effect". The double-complementary colour effect produces a darker black colour with lower brightness and saturation, thereby doubly increasing an external light absorption effect. Effectiveness of the double-complementary colour effect can be reliably demonstrated by comparing a double-complementary colour structure according to the current embodiment of the present invention with a single-complementary colour structure as illustrated in FIG. 2 in terms of external light reflection brightness and a bright room contrast ratio. The external light reflection brightness of a double-complementary colour structure according to the current embodiment of the present invention is 8.2 cd/m2 which is improved as compared with the external light reflection brightness (10.2 cd/m2) of a single-complementary colour structure. Moreover, as measured under the same conditions, the bright room contrast ratio of a single-complementary colour structure is about 93:1, and the bright room contrast ratio of a double-complementary colour structure according to the current embodiment of the present invention is about 120:1. This shows that a bright room contrast can be significantly improved using a number of combinations of complementary colours.

In the plasma display device according to the current embodiment of the present invention, the complementary first and second colours are alternately repeated to achieve a double-complementary colour effect. However, the attachable filter 130, the front substrate 110', and the phosphors 125 may also be coloured with different colours. In this case, a first colour of the attachable filter 130, a second colour of the front substrate 110', and a third colour of the phosphors 125 undergo a subtractive colour mixing when overlapped, thereby producing a dark colour.

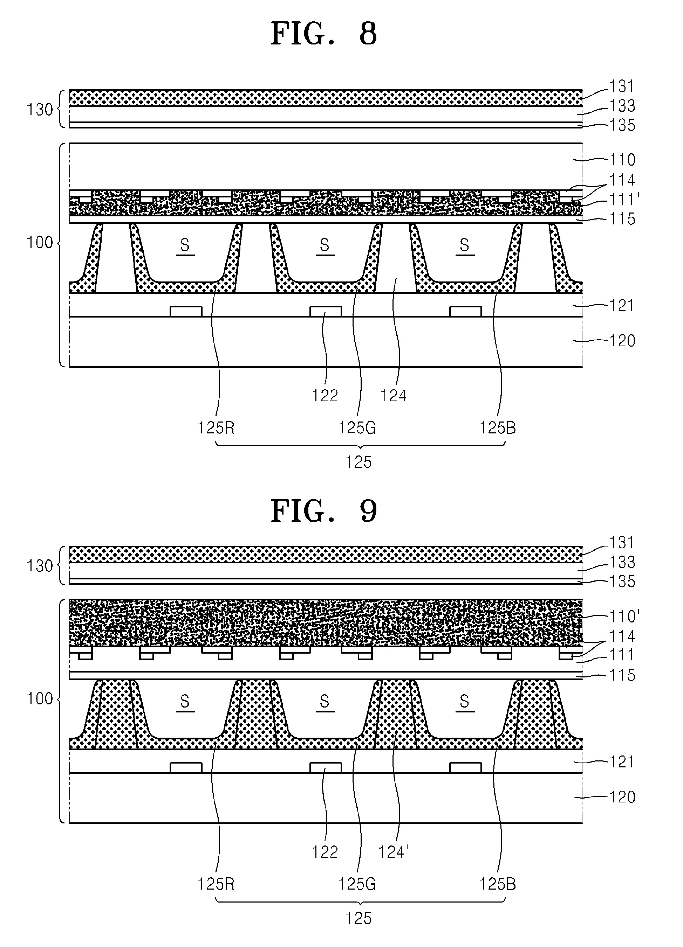

FIG. 8 is a vertical sectional view illustrating a plasma display device according to a sixth embodiment of the present invention. In the current embodiment of the present invention, as described above, complementary first and second colours are alternately repeatedly coloured to thereby achieve a so-called "double-complementary colour effect". In more detail, an attachable filter 130 is coloured with a first colour, a front dielectric layer 111' is coloured with a second colour, and phosphors 125 are coloured with the first colour. Thus, when the attachable filter 130, the front dielectric layer 111', and the phosphors 125 are overlappingly observed, a colour combination of the attachable filter 130 and the front dielectric layer 111' provides a subtractive colour mixing effect, and at the same time, a colour combination of the front dielectric layer 111' and the phosphors 125 provides another subtractive colour mixing effect. The current embodiment of the present invention provides a double-complementary colour effect, like the previous fifth embodiment, but is different from the previous fifth embodiment in that the front dielectric layer 111' is coloured instead of a front substrate 110. That is, constitutional elements to be coloured can be selected in view of convenience of a substantial colouration process.

FIG. 9 is a vertical sectional view illustrating a plasma display device according to a seventh embodiment of the present invention. In the current embodiment of the present invention, in order to achieve a double-complementary colour effect, an attachable filter 130, a front substrate 110', and phosphors 125, which are sequentially disposed from top to bottom, are alternately coloured with complementary first and second colours. The current embodiment of the present invention is different from the previous fifth embodiment in that barrier ribs 124' defining areas intended for coating the phosphors 125 are coloured with the same colour as the phosphors 125. Generally, a barrier rib material apparently exhibits white, and thus, reflects external light, thereby lowering image quality. Of course, according to the fifth embodiment of the present invention, the white colour of barrier ribs are not exposed to outside due to colouration of an attachable filter and a front substrate, and thus, a reduction in contrast due to the barrier ribs may be relatively small as compared with a conventional structure. However, according to the current embodiment of the present invention, when the barrier ribs 124' corresponding to non-display areas are coloured with the same colour as the phosphors 125, areas capable of achieving a double-complementary colour effect with the attachable filter 130 and the front substrate 110' are substantially extended over an entire image display surface.

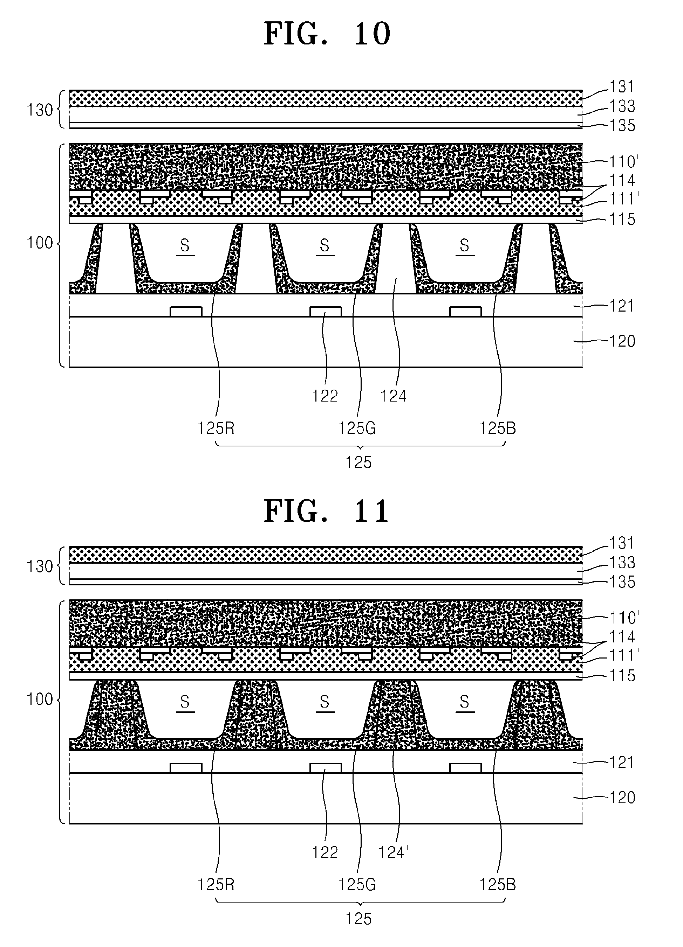

FIG. 10 is a vertical sectional view illustrating a plasma display device according to an eighth embodiment of the present invention. In the current embodiment of the present invention, complementary first and second colours are alternately stacked to achieve a multiple-complementary colour effect. In more detail, referring to FIG. 10, an attachable filter 130, a front substrate 110', a front dielectric layer 111', and phosphors 125 are respectively coloured with the first colour, the second colour, the first colour, and the second colour. Thus, a combination of the first colour of the attachable filter 130 and the second colour of the front substrate 110' provides a complementary colour effect, a combination of the second colour of the front substrate 110' and the first colour of the front dielectric layer 111' provides another complementary colour effect, and a combination of the first colour of the front dielectric layer 111' and the second colour of the phosphors 125 provides a further complementary colour effect. Thus, the plasma display device according to the current embodiment of the present invention appears darker black through a triple-complementary colour effect, thereby providing clearer images without a reduction in image quality due to external light.

Effectiveness of the triple-complementary colour effect can be reliably demonstrated by comparing external light reflection brightness and a bright room contrast ratio. External light reflection brightness gradually decreases in order of a single-complementary colour structure (about 10.2 cd/m2), a double-complementary colour structure (about 8.2 cd/m2), and a triple-complementary colour structure (6.6 cd/m2). Moreover, as measured under the same conditions, the bright room contrast ratio of a single-complementary colour structure is about 93:1, the bright room contrast ratio of a double-complementary colour structure is about 120:1, and the bright room contrast ratio of a triple-complementary colour structure according to the current embodiment of the present invention is about 151:1. This shows that a multiple-complementary colour effect can significantly improve a bright room contrast ratio. Meanwhile, when comparing a conventional structure having no complementary colour effect with a structure according to the current embodiment of the present invention, the external light reflection brightness of the structure of the current embodiment of the present invention is 6.6 cd/m2 which is significantly improved as compared with the external light reflection brightness (15.2 cd/m2) of the conventional structure. Thus, the bright room contrast ratio of the structure of the current embodiment of the present invention is 151:1 which is significantly improved as compared with the bright room contrast ratio (70:1) of the conventional structure.

The first colour and the second colour can be optionally selected from many complementary colour pairs in consideration of a process convenience, a colour tone depending on an individual preference, or the like. For example, a blue-orange colour pair may be used. Meanwhile, the attachable filter 130 directly exposed to external light needs to be coloured with a colour having a low brightness, thereby increasing the absorption of external light. In this regard, when the first colour and the second colour are mutually exclusively selected from a blue colour and an orange colour, it is preferred that the attachable filter 130 directly exposed to external light should be coloured with the blue colour having a lower brightness.

Referring to FIG. 11 illustrating a modified embodiment of the embodiment of FIG. 10, barrier ribs 124' defining areas intended for coating phosphors 125 may be coloured with the same colour as the phosphors 125. In this case, the barrier ribs 124' and the phosphors 125, together with an attachable filter 130, a front substrate 110', and a front dielectric layer 111' disposed above the barrier ribs 124' and the phosphors 125, can achieve a multiple combination of a first colour and a second colour over a wider area.

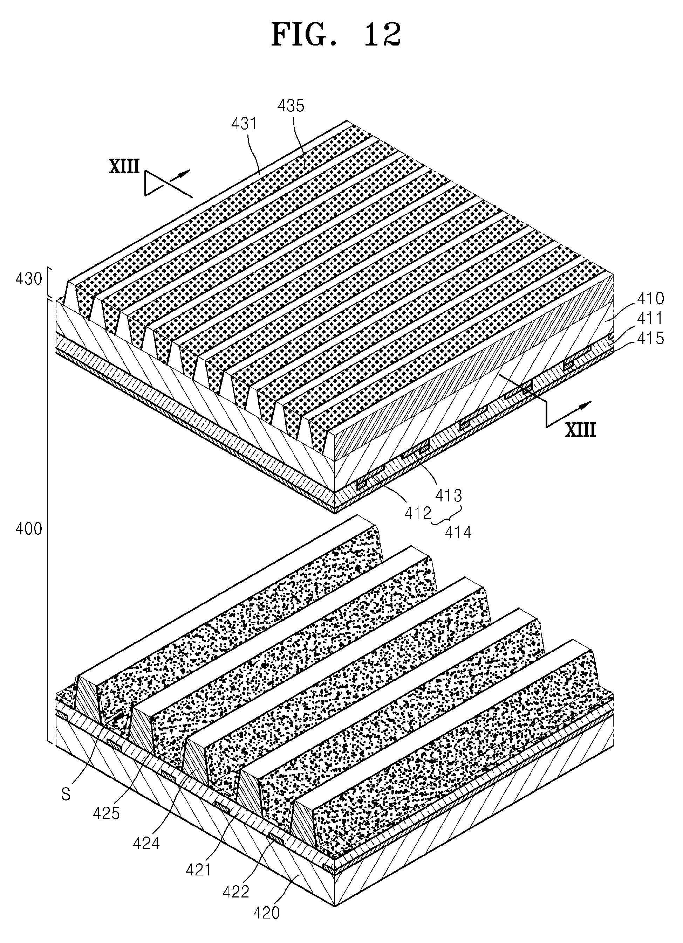

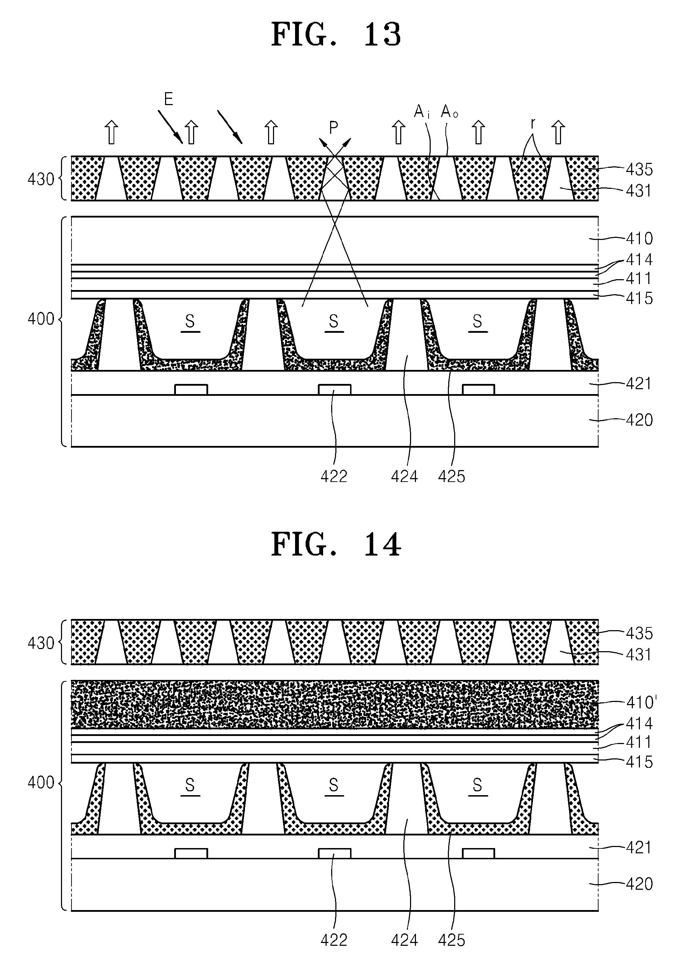

FIG. 12 is an exploded perspective view illustrating a plasma display device according to a ninth embodiment of the present invention, and FIG. 13 is a vertical sectional view taken along a line XIII-XIII of FIG. 12. Referring to FIGS. 12 and 13, the plasma display device includes a plasma display panel 400 and a front filter 430 attached to an image display surface of the plasma display panel 400. The front filter 430 includes a transparent substrate 431 and external light-absorbing patterns 435 which are arranged at predetermined distances in the transparent substrate 431 and have a width of several tens of micrometers. The external light-absorbing patterns 435 may have an inverted trapezoidal profile. In addition, the external light-absorbing patterns 435 may have various profile shapes, e.g., an inverted triangle. The external light-absorbing patterns 435 may be coloured with a first colour. The coloured external light-absorbing patterns 435 may be formed by adding a first colouring material to the transparent substrate 431 at regular intervals. Here, the transparent substrate 431 may be made of polycarbonate or the like, and the external light-absorbing patterns 435 may include a blue-colouring material such as Mn, Ni, or Co. Preferably, reflective surfaces r may be formed on sidewalls of the external light-absorbing patterns 435. The reflective surfaces r may be formed as metal coating layers made of a metal with high reflectivity, e.g., aluminum. Display light P generated by a sustain discharge in the plasma display panel 400 is reflected from the reflective surfaces r and guided toward outside while passing through the external light-absorbing patterns 435, thereby creating images that can be sensed by a viewer. The external light-absorbing patterns 435 define therebetween incidence planes Ai and output planes Ao. Preferably, the output planes Ao may be formed to be narrower than the incidence planes Ai. In this case, the display light P passing through the front filter 430 is focused along the optical axes in transmission areas gradually decreasing from the incidence planes Ai to the output planes Ao. The focused light has greater brightness and vividness, thereby enhancing image sharpness, resulting in high definition and high precision images such as XGA or SXGA. The front filter 430 may be directly attached to the image display surface of the plasma display panel 400 via an adhesive layer (not shown), or alternatively, may be disposed to be spaced apart from the plasma display panel 400 using a separate fixing member.

The plasma display panel 400 includes a front substrate 410 and a rear substrate 420 that are disposed to face each other and are separated from each other by a predetermined distance, and barrier ribs 424 interposed between the front substrate 410 and the rear substrate 420. A plurality of discharge electrode pairs 414 extending parallel to each other are arranged on the front substrate 410, and each of paired discharge electrodes 412 and 413 may include a transparent electrode and a bus electrode that are disposed to face each other in a vertical direction. The discharge electrode pairs 414 are buried in a dielectric layer 411. The dielectric layer 411 is covered with a protective layer 415. A plurality of address electrodes 422 are arranged on the rear substrate 420 and extend to intersect with the discharge electrode pairs 414. The address electrodes 422 are buried in a dielectric layer 421. The barrier ribs 424 are disposed on the dielectric layer 421 to define a plurality of discharge cells S. Phosphors 425 are coated in areas defined by the barrier ribs 424. In the current embodiment of the present invention, the phosphors 425 are coloured with a second colour complementary to the first colour of the front filter 430. For example, the complementary first and second colours may be selected from blue-orange combinations. The phosphors 425 may include an orange-colouring material such as Cu, Sb, or Cr. As described above, subtractive colour mixing of the complementary first and second colours occurs in overlapping regions of the front filter 430 (more specifically, the external light-absorbing patterns 435 of the front filter 430) and the phosphors 425, thereby producing a black colour or a near-black colour which is advantageous for absorption of external incident light E.

As measured under the same conditions, the external light reflection brightness of a plasma display device according to the current embodiment of the present invention is about 8.0 cd/m2, which is significantly reduced as compared with the external light reflection brightness (about 15.2 cd/m2) of a conventional colourless plasma display device having the same structure as the plasma display device according to the current embodiment of the present invention. The external light reflection brightness affects a bright room contrast ratio which is an indicator of image quality. Thus, the bright room contrast ratio of the conventional plasma display device is about 70:1, whereas the bright room contrast ratio of the plasma display device according to the current embodiment of the present invention is about 125: 1, showing a significant improvement in image quality.

The apparently black external light-absorbing patterns 435 can reduce external light reflection brightness to some degree without using a combination of complementary colours, unlike in the current embodiment of the present invention. In this case, however, reflection of external light occurring in areas defined between the external light-absorbing patterns 435 cannot be prevented. Moreover, since a colouring material (e.g., a blue pigment) having a higher brightness than a black pigment can lower manufacturing costs, the absorption of external light based on a complementary colour principle is more preferable than the absorption of external light based on simple blackening of external light-absorbing patterns in terms of manufacturing costs.

FIG. 14 is a vertical sectional view illustrating a plasma display device according to a tenth embodiment of the present invention. Referring to FIG. 14, a front substrate 410' facing a front filter 430 is coloured with a second colour. The second colour is a colour complementary to a first colour of external light-absorbing patterns 435. For example, the first colour and the second colour may be selected from blue-orange combinations. Overlapping regions of the external light-absorbing patterns 435 and the front substrate 410' apparently exhibit black or near-black through subtractive colour mixing of the first colour and the second colour. This shows that the subtractive colour mixing of complementary colours can reduce the reflection of external light through absorption of the external light, thereby enhancing a contrast.

Barrier ribs 424 defining discharge cells S are disposed between the front substrate 410' and a rear substrate 420, and phosphors 425 coloured with the first colour are coated in the discharge cells S. This is intended for a so-called "double-complementary colour effect". That is, subtractive colour mixing occurs between the external light-absorbing patterns 435 and the front substrate 410' that are coloured with the complementary colours, and at the same time, another subtractive colour mixing occurs between the front substrate 410' and the phosphors 425 that are coloured with the complementary colours. Such a double-complementary colour effect makes predetermined regions of a plasma display panel 400 appear wholly darker black, which is more advantageous for absorption of external light.

A front dielectric layer 411 may also be coloured instead of the front substrate 410'. In this case, as described above, subtractive colour mixing between the external light-absorbing patterns 435 and the front dielectric layer 411 that are coloured with complementary colours produces a black-based colour capable of absorbing external incident light. Of course, both the front substrate 410' and the front dielectric layer 411 may also be coloured.

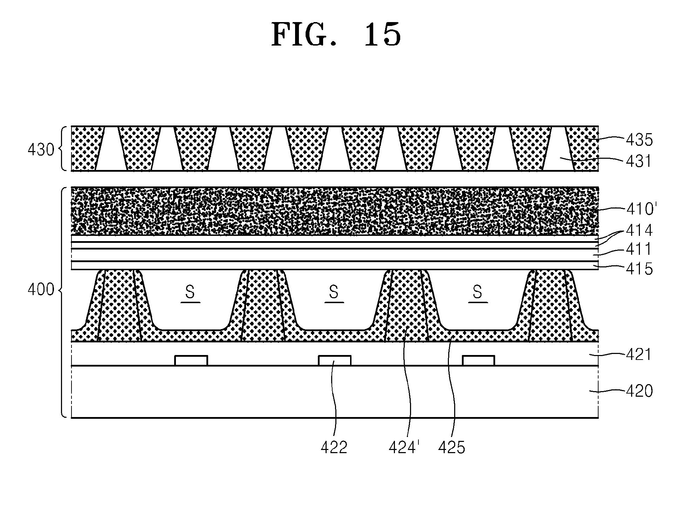

FIG. 15 is a vertical sectional view illustrating a plasma display device according to a modified embodiment of the embodiment of FIG. 14. The current embodiment of the present invention is different from the previous tenth embodiment in that barrier ribs 424' are coloured with the same colour as phosphors 425 on a surface of a rear substrate 420. By doing so, areas of exhibiting a complementary colour effect with a front substrate 410' can extend to non-display areas corresponding to the barrier ribs 424', thereby facilitating the absorption of external light over a wider area.

In the present invention, an attachable filter and predetermined elements of a plasma display panel are coloured with complementary colours, thereby making an image display surface appear wholly black through subtractive colour mixing. Therefore, it is not necessary to form common black stripes used for absorbing external light, thereby reducing manufacturing costs and the number of manufacturing processes, resulting in an increase in production yield. Moreover, unlike a conventional plasma display device in which absorption of external light occurs only in non-display areas corresponding to black stripes, in the present invention, the absorption of external light can be substantially achieved over an entire image display surface, including both display and non-display areas.

In particular, according to the present invention, for external light absorption, a display can be designed to have a combination of complementary colours repeatedly stacked between an attachable filter and elements of a plasma display panel when needed, thereby significantly enhancing image vividness according to a required specification.

In addition, a coloured attachable filter according the present invention can solve disadvantages of a conventional glass filter while maintaining an intrinsic filter function. Therefore, the attachable filter according to the present invention can be integrally attached to a front surface of a display panel without using a separate fixing member, thereby ensuring the convenience of manufacturing processes.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A plasma display device comprising:

   a plasma display panel comprising a front substrate, a rear substrate, and a plurality of discharge cells defined between the front substrate and the rear substrate, phosphors being coated in the discharge cells; and
   a filter attached to a front surface of the front substrate serving as an image display surface,

   wherein different elements of the plasma display device are coloured to provide a subtractive colour mixing effect.

2. The plasma display device of claim 1, wherein the filter and the phosphors are respectively coloured with different first and second colours.

3. The plasma display device of claim 1 or 2, wherein the first colour and the second colour are selected from complementary colour pairs.

4. The plasma display device of claim 1,
   wherein complementary first and second colours are alternately coloured from front to back in such a manner that the filter is coloured with the first colour, the front substrate is coloured with the second colour, and the phosphors are coloured with the first colour.

5. The plasma display device of claim 1, wherein:

   the plasma display panel is arranged to support a plurality of discharge electrodes, further comprising:

      a front dielectric layer having the discharge electrodes buried therein;

   wherein complementary first and second colours are alternately coloured from front to back in such a manner that the filter is coloured with the first colour, the front substrate is coloured with the second colour, the front dielectric layer is coloured with the first colour, and the phosphors are coloured with the second colour.

6. The plasma display device of any one of the preceding claims, wherein the filter comprises a base film and an electromagnetic wave-shielding layer that are disposed to face each other, and the base film is coloured with the first colour.

7. The plasma display device of any one of claims 1 to 5, wherein the filter is a single-layered filter made of a composite material comprising a base film material and an electromagnetic wave-shielding material.

8. The plasma display device of any one of claims 1 to 5, wherein the filter comprises:

   a base film;
   an anti-glare/anti-reflective layer supported at the front of the base film; an electromagnetic wave-shielding layer supported at the back of the base film to shield electromagnetic waves; and
   an adhesive layer facilitating a binding between the base film and the plasma display panel, and

   wherein at least one of the base film, the anti-glare/anti-reflective layer, and the adhesive layer is coloured with the first colour.

9. The plasma display device of any one of claims 1 to 5, wherein the filter comprises:

   a first base film:
   an anti-glare/anti-reflective layer supported at the front of the first base film;
   a second base film disposed at the back of the first base film;
   an electromagnetic wave-shielding layer disposed at the back of the second base film; and
   an adhesive layer facilitating a binding between the electromagnetic wave-shielding layer and the plasma display panel, and

   wherein at least one of the first base film, the anti-glare/anti-reflective layer, the second base film, and the adhesive layer is coloured with the first colour.

10. The plasma display device according to claim 1, wherein the filter comprises a transparent substrate and a plurality of external light-absorbing patterns arranged at predetermined intervals in the transparent substrate, wherein the external light-absorbing patterns and the phosphors are respectively coloured with complementary first and second colours.

11. The plasma display device of claim 10, wherein the external light-absorbing patterns have an inverted trapezoidal profile.

12. The plasma display device of claim 10 or 11, wherein reflective surfaces are formed at sides of the external light-absorbing patterns.

13. The plasma display device of claim 1, wherein the filter comprises:

a transparent substrate and a plurality of external light-absorbing patterns arranged at predetermined intervals in the transparent substrate,

wherein complementary first and second colours are alternately coloured from front to back in such a manner that the external light-absorbing patterns are coloured with the first colour, the front substrate is coloured with the second colour, and the phosphors are coloured with the first colour.

14. The plasma display device of any one of the preceding claims, wherein barrier ribs defining the plurality of the discharge cells are disposed between the front substrate and the rear substrate.

15. The plasma display device of claim 14, wherein the barrier ribs are coloured with the same colour as the phosphors.

16. The plasma display device of any one of the preceding claims, wherein when the phosphors are divided into red, green, and blue phosphors according to emission colour, the red and blue phosphors are coloured with one of the first and second colours and the green phosphors are not coloured.

17. The plasma display device of any one of the preceding claims, wherein the first colour and the second colour are mutually exclusively selected from a blue colour and an orange colour.

# FIG. 1

# FIG. 2

131
133
135
130

110
114
111
115
100

S   S   S

121
120

122   124

125R   125G   125B

125

# FIG. 3

DEEP RED   RED   CRIMSON

PURPLE   ORANGE

MAGENTA   ORANGE-YELLOW

VIOLET   YELLOW

VIOLET-BLUE   YELLOW-LIGHT GREEN

COMPLEMENTARY COLORS

INDIGO   LIGHT GREEN

DEEP BLUE   GRASS GREEN

BLUE   GREEN

SEA-GREEN   DARK GREEN

CYAN

# FIG. 4

# FIG. 5

# FIG. 6

# FIG. 7

# FIG. 8

# FIG. 9

# FIG. 10

131
133
135
130

110'
114
111'
115

100

S    S    S

121

120

122    124

125R    125G    125B

125

# FIG. 11

131
133
135
130

110'
114
111'
115

100

S    S    S

121

120

122    124'

125R    125G    125B

125

# FIG. 12

# FIG. 13

# FIG. 14

# FIG. 15